# EUROPEAN PATENT APPLICATION

(11) **EP 4 484 712 A1**
(43) Date of publication of application: **01.01.2025**
(21) Application number: 24185799.4
(22) Date of filing: 01.07.2024
(51) Int. Cl.: F01D 11/00

(54) **ANNULAR SEAL WITH INTERLOCKED RINGS**

(30) Priority: 30.06.2023 US 202318346146
(71) Applicant: RTX Corporation, Farmington, CT 06032 (US)
(72) Inventor: VANOVER, Adam David, Farmington, 06032 (US)
(74) Representative: Dehns

(57) **Abstract**

A gas turbine engine (20) includes a rotor (62) that has a seal surface (68) and a shaft (70) that is rotatable about an engine central axis (A). The shaft has an annular seal channel (72) that opens to the seal surface. An annular seal (74) is insertable into the annular seal channel for sealing against the seal surface. The annular seal is comprised of first and second rings (76, 78) that each have a split joint (80), a slot (82) radially adjacent the split joint, and a tab (84) that projects into the slot of the other of the first or second rings such that the first and second rings are circumferentially interlocked.

## Description

### BACKGROUND

A gas turbine engine typically includes a fan section, a compressor section, a combustor section and a turbine section. Air entering the compressor section is compressed and delivered into the combustion section where it is mixed with fuel and ignited to generate a high-speed exhaust gas flow. The high-speed exhaust gas flow expands through the turbine section to drive the compressor and the fan section. The compressor section typically includes low and high pressure compressors, and the turbine section includes low and high pressure turbines.

The high pressure turbine drives the high pressure compressor through an outer shaft to form a high spool, and the low pressure turbine drives the low pressure compressor through an inner shaft to form a low spool. The fan section may also be driven by the low inner shaft. A direct drive gas turbine engine includes a fan section driven by the low spool such that the low pressure compressor, low pressure turbine and fan section rotate at a common speed in a common direction.

A speed reduction device, such as an epicyclical gear assembly, may be utilized to drive the fan section such that the fan section may rotate at a speed different than the turbine section. In such engine architectures, a shaft driven by one of the turbine sections provides an input to the epicyclical gear assembly that drives the fan section at a reduced speed.

### SUMMARY

A gas turbine engine according to an example of the present disclosure includes a rotor that has a seal surface, and a shaft that is rotatable about an engine central axis. The shaft has an annular seal channel that opens to the seal surface and an annular seal that is insertable into the annular seal channel for sealing against the seal surface. The annular seal is comprised of first and second rings. Each of the first and second rings have a split joint, a slot radially adjacent the split j oint, and a tab that projects into the slot of the other of the first or second rings such that the first and second rings are circumferentially interlocked.

In a further embodiment of any of the foregoing embodiments, on each of the first and second rings the split joint is located approximately 180° from the tab.

In a further embodiment of any of the foregoing embodiments, the split joint is a butt j oint.

In a further embodiment of any of the foregoing embodiments, the butt joint defines a butt gap, and the tab bridges the butt gap.

In a further embodiment of any of the foregoing embodiments, each of the first and second rings defines first and second axial faces and first and second radial faces, and the respective slots on the first and second rings open at the first axial face and the first radial face.

In a further embodiment of any of the foregoing embodiments, the first radial face is a radially inner face.

In a further embodiment of any of the foregoing embodiments, the tab defines an axial length and each of the first and second rings defines an axial thickness, and the axial length is approximately equal to the axial thickness.

In a further embodiment of any of the foregoing embodiments, the tab includes a tapered tip.

An annular seal for a gas turbine engine according to an example of the present disclosure includes first and second rings. Each of the first and second rings has at least one split joint, at least one slot radially adjacent the at least one split joint, and at least one tab that projects into the at least one slot of the other of the first or second ring such that the first and second rings are circumferentially interlocked.

In a further embodiment of any of the foregoing embodiments, on each of the first and second rings the at least one split joint is located approximately 180° from the tab.

In a further embodiment of any of the foregoing embodiments, the at least one split joint is a butt joint.

In a further embodiment of any of the foregoing embodiments, the butt joint defines a butt gap, and the at least one tab bridges the butt gap.

In a further embodiment of any of the foregoing embodiments, each of the first and second rings defines first and second axial faces and radially inner and outer faces, and the respective slots on the first and second rings open at the first axial face and the radially inner face.

In a further embodiment of any of the foregoing embodiments, the at least one tab includes a tapered tip.

In a further embodiment of any of the foregoing embodiments, the at least one split joint includes multiple split joints, the at least one slot includes multiple slots, and the at least one tab includes multiple tabs.

A method of assembling a seal into a gas turbine engine according to an example of the present disclosure includes providing an annular seal as in any of the preceding embodiments, arranging the first ring next to the second ring such that the tab on each of the first and second rings projects into the slot of the other of the first and second rings to circumferentially interlock the first and second rings together, and arranging the annular seal into the annular seal channel.

In a further embodiment of any of the foregoing embodiments, the split joint is a butt j oint that defines a butt gap, and the tab bridges the butt gap.

In a further embodiment of any of the foregoing embodiments, each of the first and second rings defines first and second axial faces and radially inner and outer faces, and the respective slots on the first and second rings open at the first axial face and the radially inner face.

In a further embodiment of any of the foregoing embodiments, the tab includes a tapered tip.

The present disclosure may include any one or more of the individual features disclosed above and/or below alone or in any combination thereof.

### BRIEF DESCRIPTION OF THE DRAWINGS

The various features and advantages of the present disclosure will become apparent to those skilled in the art from the following detailed description. The drawings that accompany the detailed description can be briefly described as follows.
Figure 1 illustrates a gas turbine engine.
Figure 2 illustrates a preassembled view of an annular seal.
Figure 3 illustrates one of the rings of the annular seal.
Figure 4 illustrates a split j oint and slot of one of the rings of the annular seal.
Figure 5 illustrates a tab of a ring of the annular seal.
Figure 6 illustrates an assembled view in which the tab of one ring projects into the slot of the other ring of the annular seal.
Figure 7 illustrates a butt joint of the annular seal.
Figure 8 illustrates another annular seal in which each of the rings has multiple split joints and multiple tabs.

In this disclosure, like reference numerals designate like elements where appropriate and reference numerals with the addition of one-hundred or multiples thereof designate modified elements that are understood to incorporate the same features and benefits of the corresponding elements. Terms such as "first" and "second" used herein are to differentiate that there are two architecturally distinct components or features. Furthermore, the terms "first" and "second" are interchangeable in that a first component or feature could alternatively be termed as the second component or feature, and vice versa.

### DETAILED DESCRIPTION

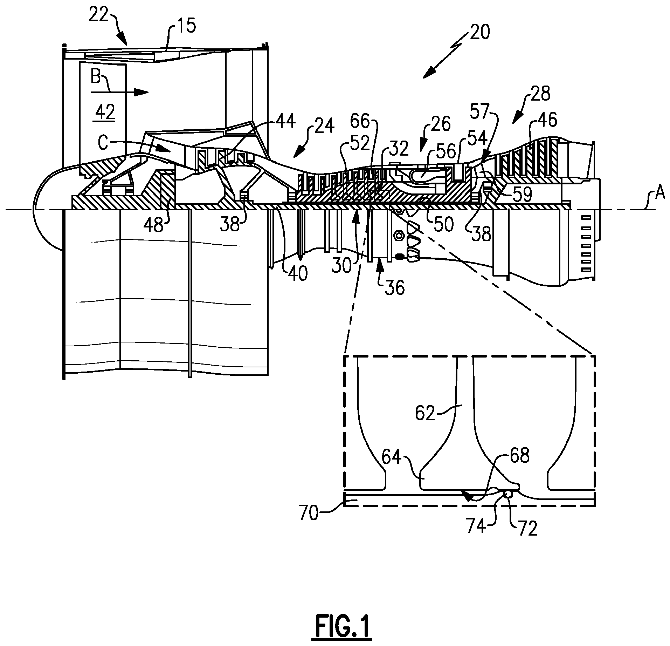

Figure 1 schematically illustrates a gas turbine engine 20. The gas turbine engine 20 is disclosed herein as a two-spool turbofan that generally incorporates a fan section 22, a compressor section 24, a combustor section 26 and a turbine section 28. The fan section 22 drives air along a bypass flow path B in a bypass duct defined within a housing 15 such as a fan case or nacelle, and also drives air along a core flow path C for compression and communication into the combustor section 26 then expansion through the turbine section 28. Although depicted as a two-spool turbofan gas turbine engine in the disclosed non-limiting embodiment, it should be understood that the concepts described herein are not limited to use with two-spool turbofans as the teachings may be applied to other types of turbine engines including three-spool architectures.

The exemplary engine 20 generally includes a low speed spool 30 and a high speed spool 32 mounted for rotation about an engine central longitudinal axis A relative to an engine static structure 36 via several bearing systems 38. It should be understood that various bearing systems 38 at various locations may alternatively or additionally be provided, and the location of bearing systems 38 may be varied as appropriate to the application.

The low speed spool 30 generally includes an inner shaft 40 that interconnects, a first (or low) pressure compressor 44 and a first (or low) pressure turbine 46. The inner shaft 40 is connected to the fan 42 through a speed change mechanism, which in exemplary gas turbine engine 20 is illustrated as a geared architecture 48 to drive a fan 42 at a lower speed than the low speed spool 30. The high speed spool 32 includes an outer shaft 50 that interconnects a second (or high) pressure compressor 52 and a second (or high) pressure turbine 54. A combustor 56 is arranged in the exemplary gas turbine 20 between the high pressure compressor 52 and the high pressure turbine 54. A mid-turbine frame 57 of the engine static structure 36 may be arranged generally between the high pressure turbine 54 and the low pressure turbine 46. The mid-turbine frame 57 further supports bearing systems 38 in the turbine section 28. The inner shaft 40 and the outer shaft 50 are concentric and rotate via bearing systems 38 about the engine central longitudinal axis A which is collinear with their longitudinal axes.

The core airflow is compressed by the low pressure compressor 44 then the high pressure compressor 52, mixed and burned with fuel in the combustor 56, then expanded through the high pressure turbine 54 and low pressure turbine 46. The mid-turbine frame 57 includes airfoils 59 which are in the core airflow path C. The turbines 46, 54 rotationally drive the respective low speed spool 30 and high speed spool 32 in response to the expansion. It will be appreciated that each of the positions of the fan section 22, compressor section 24, combustor section 26, turbine section 28, and fan drive gear system 48 may be varied. For example, gear system 48 may be located aft of the low pressure compressor, or aft of the combustor section 26 or even aft of turbine section 28, and fan 42 may be positioned forward or aft of the location of gear system 48.

The engine 20 in one example is a high-bypass geared aircraft engine. In a further example, the engine 20 bypass ratio is greater than about six (6), with an example embodiment being greater than about ten (10), and can be less than or equal to about 18.0, or more narrowly can be less than or equal to 16.0. The geared architecture 48 is an epicyclic gear train, such as a planetary gear system or other gear system, with a gear reduction ratio of greater than about 2.3. The gear reduction ratio may be less than or equal to 4.0. The low pressure turbine 46 has a pressure ratio that is greater than about five. The low pressure turbine pressure ratio can be less than or equal to 13.0, or more narrowly less than or equal to 12.0. In one disclosed embodiment, the engine 20 bypass ratio is greater than about ten (10:1), the fan diameter is significantly larger than that of the low pressure compressor 44, and the low pressure turbine 46 has a pressure ratio that is greater than about five 5:1. Low pressure turbine 46 pressure ratio is pressure measured prior to an inlet of low pressure turbine 46 as related to the pressure at the outlet of the low pressure turbine 46 prior to an exhaust nozzle. The geared architecture 48 may be an epicycle gear train, such as a planetary gear system or other gear system, with a gear reduction ratio of greater than about 2.3:1 and less than about 5:1. It should be understood, however, that the above parameters are only exemplary of one embodiment of a geared architecture engine and that the present invention is applicable to other gas turbine engines including direct drive turbofans.

A significant amount of thrust is provided by the bypass flow B due to the high bypass ratio. The fan section 22 of the engine 20 is designed for a particular flight condition -- typically cruise at about 0.8 Mach and about 35,000 feet (10,668 meters). The flight condition of 0.8 Mach and 35,000 ft (10,668 meters), with the engine at its best fuel consumption - also known as "bucket cruise Thrust Specific Fuel Consumption ('TSFC')" - is the industry standard parameter of lbm of fuel being burned divided by lbf of thrust the engine produces at that minimum point. The engine parameters described above and those in this paragraph are measured at this condition unless otherwise specified. "Low fan pressure ratio" is the pressure ratio across the fan blade alone, without a Fan Exit Guide Vane ("FEGV") system. The low fan pressure ratio as disclosed herein according to one non-limiting embodiment is less than about 1.45, or more narrowly greater than or equal to 1.25. "Low corrected fan tip speed" is the actual fan tip speed in ft/sec divided by an industry standard temperature correction of [(Tram °R) / (518.7 °R)]^{0.5}. The "Low corrected fan tip speed" as disclosed herein according to one non-limiting embodiment is less than about 1150.0 ft / second (350.5 meters/second), and can be greater than or equal to 1000.0 ft / second (304.8 meters/second).

The high pressure compressor 52 includes a rotor 62 that has a bore portion 64 (shown in Fig. 1 inset). In this example, the rotor 62 carries rotor blades 66, which may be integral with the rotor 62 or mechanically attached to the rotor 62. It is to be understood, however, that in other examples the rotor 62 may not have blades. The bore portion 64 defines a seal surface 68. In this example, the seal surface 68 is in a central bore of the rotor 62, but it could alternatively be on a flange or arm that extends from the rotor 62. A shaft 70 extends through the bore. The shaft 70 may be part of the high speed spool 32. The rotor 62 and the shaft 70 are rotatable in the same direction about the engine central axis A.

The shaft 70 defines an annular seal channel 72 that opens to the seal surface 68. There is an annular seal 74 disposed in the channel 72 for sealing against the seal surface 68. When the engine 20 is running, there is a pressure differential between the upstream and downstream regions of the rotor 62. Centrifugal forces pull the annular seal 74 against the seal surface 68 to facilitate isolating the upstream and downstream regions from each other across the rotor 62.

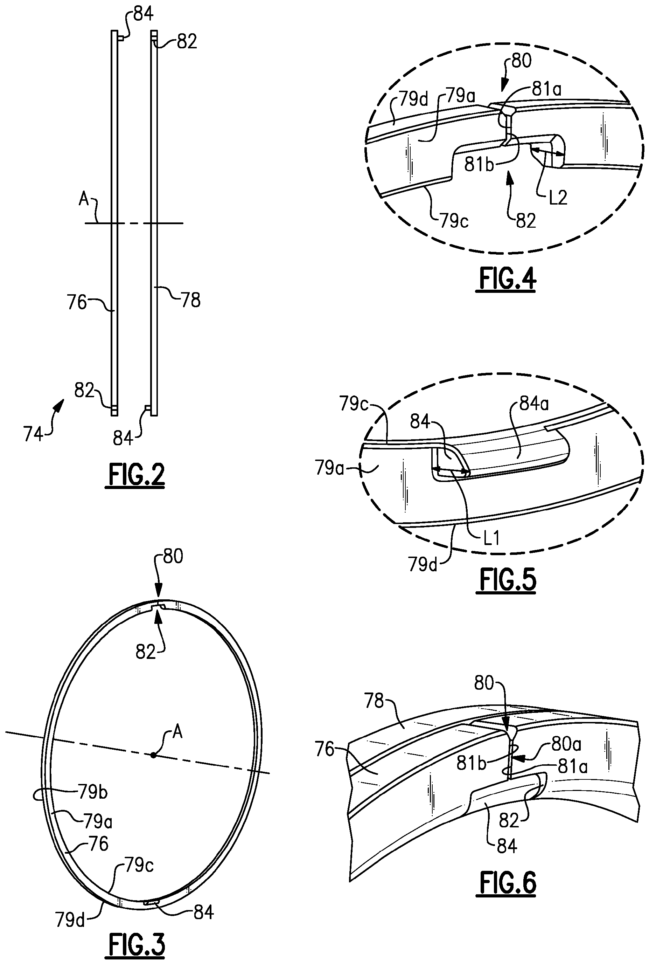

Figure 2 illustrates a pre-assembled view of the annular seal 74. The annular seal 74 is comprised of first and second rings 76/78. The first ring 76 is also shown in an isolated view in Figure 3. The second ring 78 is identical to the first ring 76. The rings 76/78 may be formed from a metallic material, such as steel, but may alternatively be made of a composite material. Each of the rings 76/78 has axial faces 79a/79b, radially inner and outer faces 79c/79d, a split joint 80, a slot 82 radially adjacent the split joint 80, and a tab 84. It is to be understood that the singular articles "a," "an," and "the" are intended to encompass the plural forms as well, unless context clearly indicates otherwise. For example, on each ring 76/78 the split joint 80 is located approximately 180° opposite its tab 84. Once assembled, the split joints 80 are thus located approximately 180° opposite each other. Such a configuration ensures that the split joints 80 are opposite each other to avoid relative motion. Moreover, the location of the tab 84 apposite the split joint 80 is also where the most bending stress on each ring 76/78 is expected, and the additional thickness provided by the tabs 84 may therefore mitigate some of the bending stress.

The split joint 80 and slot 82 are also shown in Figure 4, and the tab 84 is shown in Figure 5. In this example, the split joint 80 is a butt-type joint at which the circumferential faces 81a/81b may or may not meet (during use the faces 81a/81b separate due to centrifugal forces). The slot 82 is "radially adjacent" in that its circumferential location overlaps with that of the split joint 80, i.e., the split joint 80 radially intersects the slot 82. The slot 82 as shown is generally a rectangular arc segment, though the extent and geometry could be varied. The slot 82 extends the full axial thickness of the respective ring 76/78 such that it opens at both axial faces 79a/79b but only extends a portion of the radial thickness such that the slot 82 opens at the radially inner face 79c. As will be appreciated, the split joint 80 and slot 82 could be switched such that the slot opens to the radially outer face 79d and the split joint 80 is toward the radially inner face 79c.

The tabs 84 project from the axial faces 79a of the rings 76/78, and the geometry of the tabs 84 generally corresponds to that of the slots 82. The tabs 84, however, are slightly smaller than the slots 82 so as to be able to fit into the slots 82 with clearance. As shown in Figure 2, the rings 76/78 are oppositely oriented such that the tab 84 of the first ring 76 circumferentially and radially aligns with the slot 82 of the second ring 78, and the tab 84 of the second ring 78 circumferentially and radially aligns with the slot 82 of the first ring 76. When brought axially together, as depicted in Figure 6, the tab 84 of each ring 76/78 is received into the slot 82 of the other ring 76/78 such that the rings 76/78 become circumferentially interlocked via interference between the tabs 84 and the sides of the slots 82. As an example, the tabs 84 optionally include tapered tips 84a (tapering in radial thickness). The tapered tips 84a help pilot the tabs 84 into the slots 82 during assembly and may also provide a rounded edge to avoid the presence of sharp corners.

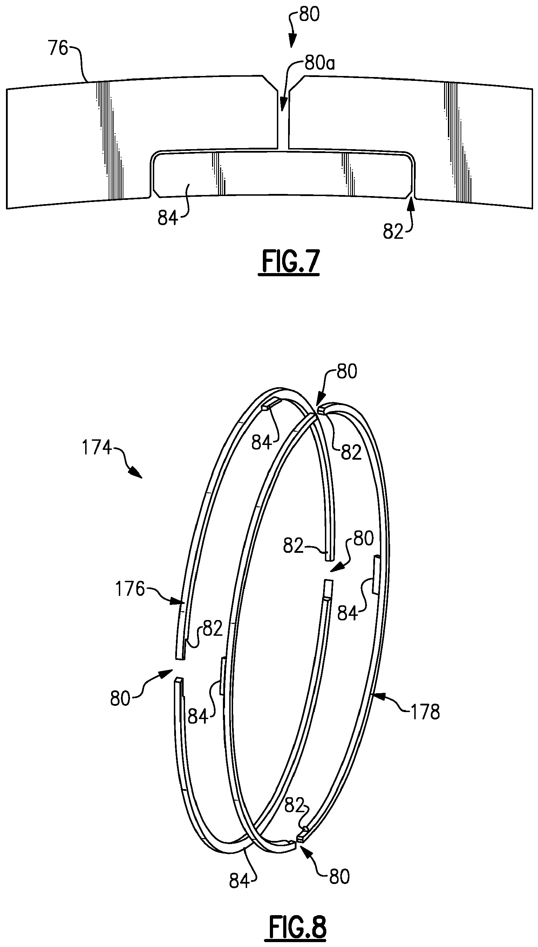

As shown in Figures 6 and 7, the butt joint defines a butt gap 80a. The gap 80a may be present in the rings 76/78 at rest, though the rings 76/78 may be elastically compressed such that the faces 81a/81b meet. During use, the gap 80a increases such that the faces 81a/81b move apart from each other. The tabs 84 bridge the respective gaps 80a and thus serve to block leakage flow through the gap 80a, thereby reducing flow across the seal 74. For instance, the tabs 84 are sized such that for a given gap size during use, the tabs 84 continuously bridge the gap 80a to maintain sealing. That is, the circumferential length of the tab 84 is greater than the sum of 50% of the circumferential length of the slot 82 and the expected size of the gap 80a.

The tabs 84 also define an axial length L1 (Figure 5) from the base of the tab 84 at the axial face 79a to the end of the tapered tip 84a, and each of the rings 76/78 defines an axial thickness L2. The axial length L1 is approximately equal to the axial thickness L2. Thus ensures that each tab 84 extends through virtually the full thickness of the mating ring 76/78, to seal the entire axial extent of the gap 80a. Alternatively, L1 may be less than L2 if there is a need to account for tolerances.

The annular seal 74 as described above is provided for assembly into the engine 20. For instance, the first ring 76 is arranged next to the second ring 78 such that the tabs 84 align with the slots 82. The rings 76/78 are then brought together such that the tabs 84 are received into the respective slots 82 to circumferentially interlock the rings 76/78 together. To install the annular seal 74 into the seal channel 72 on the shaft 70, the annular seal 74 is elastically expanded from its state of rest to a diametric size that permits it to be fit over the shaft 70 and moved to the location of the seal channel 72. Most typically, this will be conducted manually, but tools or automation may be used to assist. As the annular seal 74 is expanded within its elastic limit, upon release the seal 74 elastically rebounds into the seal channel 72. In one example, the rings 76/78 are interlocked together prior to fitting the seal 74 onto the shaft 70 and into the seal channel 72. Alternatively, if space permits, each ring 76/78 may be fit onto the shaft 70 then interlocked together before being released into the seal channel 72.

In the above-described examples, the rings 76/78 are non-segmented, i.e., each ring 76/78 is a continuous hoop except for the split joint 80. However, in another example annular seal 174 shown in Figure 8, each of the first and second rings 176/187 has two split joints 80 such that each ring 176/178 includes two arc segments. The seal 174 is thus a four-piece seal. On each ring 176/178, the split joints 80 are located 180° from each other. As will be appreciated, the rings 176/178 could include additional split joints 80 to create additional segments. In instances where the diametric expansion needed to fit over the shaft 70 would exceed the elastic limit of the seal or where there are space or other assembly limitations, the segmented rings 176/178 can be assembled piece-by-piece and do not require elastic expansion for installation.

In comparison to a single-ring split seal, the seal 74 facilitates enhanced performance. For instance, the seal 74 enables use of the gaps 80a at the split joints 80. While a gap in a single-ring split seal would allow leakage, the tabs 84 block the gaps 80a and thus reduce leakage flow across the seal 74. A reduced leakage facilitates concomitant reductions in the magnitude of thermal asymmetry, which can otherwise create asymmetric thermal loads, asymmetric vibration, and asymmetric seal loads/friction, all of which can debit sealing performance and durability. Moreover, the presence of the gaps 80a facilitates reduction of variations in contact force between the seal 74 and the contact location on the seal surface 68, which reduces friction and wear at the seal surface 68.

Although a combination of features is shown in the illustrated examples, not all of them need to be combined to realize the benefits of various embodiments of this disclosure. In other words, a system designed according to an embodiment of this disclosure will not necessarily include all of the features shown in any one of the Figures or all of the portions schematically shown in the Figures. Moreover, selected features of one example embodiment may be combined with selected features of other example embodiments.

The preceding description is exemplary rather than limiting in nature. Variations and modifications to the disclosed examples may become apparent to those skilled in the art that do not necessarily depart from this disclosure. The scope of legal protection given to this disclosure can only be determined by studying the following claims.

## Claims

1. A gas turbine engine (20) comprising:
a rotor (62) having a seal surface (68);
a shaft (70) rotatable about an engine central axis (A), the shaft having an annular seal channel (72) that opens to the seal surface; and
an annular seal (74; 174) that is insertable into the annular seal channel for sealing against the seal surface, the annular seal being comprised of first and second rings (76, 78; 176, 178), each of the first and second rings having a split joint (80), a slot (82) radially adjacent the split joint, and a tab (84) that projects into the slot of the other of the first or second rings such that the first and second rings are circumferentially interlocked.

2. The gas turbine engine as recited in claim 1, wherein on each of the first and second rings the split joint is located approximately 180° from the tab.

3. The gas turbine engine as recited in claim 1 or 2, wherein the split j oint is a butt joint.

4. The gas turbine engine as recited in claim 3, wherein the butt joint defines a butt gap (80a), and the tab bridges the butt gap.

5. The gas turbine engine as recited in any preceding claim, wherein each of the first and second rings defines first and second axial faces (79a, 79b) and first and second radial faces (79c, 79d), and the respective slots on the first and second rings open at the first axial face and the first radial face.

6. The gas turbine engine as recited in claim 5, wherein the first radial face is a radially inner face.

7. The gas turbine engine as recited in any preceding claim, wherein the tab defines an axial length (L1) and each of the first and second rings defines an axial thickness (L2), and the axial length is approximately equal to the axial thickness.

8. The gas turbine engine as recited in any preceding claim, wherein the tab includes a tapered tip (84a).

9. An annular seal (74; 174) for a gas turbine engine (20), comprising:
first and second rings (76, 78; 176, 178), each of the first and second rings having at least one split joint (80), at least one slot (82) radially adjacent the at least one split joint, and at least one tab (84) that projects into the at least one slot of the other of the first or second ring such that the first and second rings are circumferentially interlocked.

10. The annular seal as recited in claim 9, wherein:
on each of the first and second rings the at least one split joint is located approximately 180° from the tab; and/or
the at least one split joint is a butt j oint, and, optionally, the butt joint defines a butt gap (80a), and the at least one tab bridges the butt gap.

11. The annular seal as recited in claim 9 or 10, wherein:
each of the first and second rings defines first and second axial faces (79a, 79b) and radially inner and outer faces (79c, 79d), and the respective slots on the first and second rings open at the first axial face and the radially inner face; and/or
the at least one tab includes a tapered tip (84a).

12. The annular seal as recited in claim 9, 10 or 11, wherein the at least one split joint includes multiple split joints, the at least one slot includes multiple slots, and the at least one tab includes multiple tabs.

13. A method of assembling a seal into a gas turbine engine, the method comprising:
providing an annular seal (74; 174) that has first and second rings (76, 78; 176, 178), each of the first and second rings has a split joint (80), a slot (82) radially adjacent the split joint, and a tab (84);
arranging the first ring next to the second ring such that the tab on each of the first and second rings projects into the slot of the other of the first and second rings to circumferentially interlock the first and second rings together; and
arranging the annular seal into the annular seal channel.

14. The method as recited in claim 13, wherein the split joint is a butt j oint that defines a butt gap (80a), and the tab bridges the butt gap.

15. The method as recited in claim 13 or 14, wherein:
each of the first and second rings defines first and second axial faces (79a, 79b) and radially inner and outer faces (79c, 79d), and the respective slots on the first and second rings open at the first axial face and the radially inner face; and/or
the tab includes a tapered tip (84a).
